# FASCICULE DE BREVET EUROPEEN

(11) **EP 1 066 950 B1**
(45) Date de publication et mention de la délivrance du brevet: **26.05.2004**
(21) Numéro de dépôt: 00401922.0
(22) Date de dépôt: 05.07.2000
(51) Int. Cl.: B29C 51/04, B29C 51/26, B29C 51/42

(54) **Procédé de thermoformage de pots et dispositif pour sa mise en oeuvre**
Verfahren zum Herstellen von Gefässen durch Warmumformen und Vorrichtung dazu
Method for thermoforming plastic pots and apparatus therefor

(30) Priorité: 09.07.1999 FR 9908916
(43) Date de publication de la demande: 10.01.2001
(73) Titulaire: ERCA FORMSEAL, 91940 Les Ulis Cedex (FR)
(72) Inventeur: Lemouzy, Etienne, 92110 Clichy (FR)
(74) Mandataire: Intès, Didier Gérard André

(56) Documents cités:
- EP-A- 0 435 234
- DE-A- 19 737 503
- FR-A- 1 427 784
- FR-A- 1 460 122
- GB-A- 1 500 961
- US-A- 3 465 071
- US-A- 3 634 182
- PATENT ABSTRACTS OF JAPAN vol. 1999, no. 11, 30 septembre 1999 (1999-09-30) & JP 11 147251 A (SHINWA KIKAI:KK;IDEMITSU PETROCHEM CO LTD), 2 juin 1999 (1999-06-02) & EP 0 972 627 A (IDEMITSU PETROCHEMICAL CO;SHINWA KIKAI CO LTD (JP)) 19 janvier 2000 (2000-01-19)

## Description

La présente invention concerne d'une manière générale la fabrication de pots en matière plastique et plus particulièrement un procédé de thermoformage de tels pots dans lequel une feuille de matière plastique préalablement chauffée est étirée à l'aide d'un poinçon puis mise en forme par placage contre l'empreinte d'un moule.

Les pots obtenus par thermoformage sont destinés à contenir des produits liquides ou pâteux tels que des denrées comestibles, produits laitiers, jus de fruits, etc... ou des denrées non comestibles, par exemple des produits d'entretien, shampooing, lessive, etc...

A l'heure actuelle, le procédé de thermoformage est usuellement mis en oeuvre dans les machines appelées "form-fill-seal" dans lesquelles les pots sont formés à partir d'une feuille de matière plastique pincée entre un moule présentant une (ou des) empreintes de formage et un contre-moule dans lequel se déplace(nt) un (ou des) poinçon(s) de formage, remplis et fermés à la cadence de 30 pots par minute et par empreinte de thermoformage.

Ces machines, bien que largement utilisées et donnant globalement satisfaction, présentent quelques inconvénients ne permettant pas d'optimiser leur rendement. En particulier, le formage des pots n'utilise pas toute la capacité à s'étirer de la feuille de matière plastique ce qui oblige à utiliser plus de matière que cela n'est réellement nécessaire pour le formage de chaque pot. Il s'ensuit une difficulté à réduire les coûts de fabrication, les coûts de transport et les nuisances dues au traitement des pots usagés.

De plus, le temps disponible pour l'opération de formage est très court du fait des temps nécessaires au transfert de la matière plastique, à la fermeture du contre-moule sur le moule avec pincement de la matière plastique, d'ouverture du moule et d'extraction du pot formé et refroidi. A titre d'exemple, lorsque la machine fonctionne à 30 cycles par minute, le temps imparti à l'étirage de la matière plastique et au formage du pot est de l'ordre de 0,8 seconde.

La demande de brevet JP 11 147251 divulgue un procédé de thermoformage de pots, dans lequel les pots sont obtenus par étirage d'une feuille de matière plastique à l'aide de poinçons montés coulissants dans un contre-moule et dans l'empreinte d'un moule, puis placage contre les parois de ladite empreinte, ladite feuille de matière plastique étant pincée dans un module de maintien indépendant du moule et comportant au moins une ouverture, puis préchauffée, le chauffage de la matière étant réalisé par des fers de chauffe présentant des excroissances destinées à être introduites en partie dans les ouvertures dudit module de maintien afin d'être amenées au contact de la matière plastique destinée à être formée, disposée dans lesdites ouvertures.

Le brevet FR 1 427 784 divulgue un procédé utilisant un dispositif dans lequel le poinçon est porté par une platine qui pénètre à l'intérieur du module de maintien entre les deux éléments duquel est pincée la feuille de matière plastique. Contrairement au procédé de JP 11 147251, celui de FR 1 427 784 permet que l'étirage commence avant la fermeture du moule. Toutefois, dans FR 1 427 784, le formage ne commence que lorsque ce moule est fermé contre la platine qui porte le poinçon, cette dernière devant pour cela se déplacer à l'intérieur du module de maintien jusqu'à parvenir au contact du moule.

Le formage ne peut donc commencer qu'une fois que la platine qui porte le poinçon s'est déplacée sur une course relativement importante, de sorte que le temps disponible pour le formage est très court. De plus, la perte de matière est importante.

La présente invention tend à proposer un procédé de thermoformage de pots en matière plastique ayant des performances améliorées par rapport au procédé actuellement mis en oeuvre en essayant de s'affranchir au maximum de la contrainte née du faible temps d'étirage et formage disponible dans le cycle de fabrication et en permettant que le formage débute plus tôt que dans les procédés connus, notamment pour tenir compte du faible temps disponible pour l'évacuation de l'air lors du formage de l'empreinte.

Dans ce but, l'invention propose de réaliser l'essentiel de l'opération d'étirage de la matière plastique avant la fermeture du moule, celle-ci devenant nécessaire uniquement pour terminer le formage du ou des pots.

Plus précisément, l'invention se propose d'améliorer le procédé connu pour JP 11 147251 grâce au fait que le module de maintien est indépendant du contre-moule, que le contre-moule est approché du module de maintien tandis que le moule est laissé à distance du module de maintien, que l'étirage de la matière débute avant que le moule soit fermé contre ledit module de maintien pour effectuer le formage de ladite matière plastique, que le formage début lorsque ledit contre-moule est en place, en appui sur le module de maintien et avant que le moule soit en appui sur le module de maintien, et que de l'air est envoyé à l'intérieur de la poche de matière plastique créée par le déplacement du poinçon afin d'aider la réalisation de l'étirage de la matière.

Lorsque l'étirage est ainsi réalisé avant que le moule soit en appui contre le module de maintien, c'est-à-dire en poussant la matière dans l'air ambiant, ladite matière conserve plus longtemps sa température initiale du fait qu'elle n'est pas refroidie par convection par la paroi froide du moule, ceci permet d'effectuer un étirage plus uniforme et donc d'utiliser uniquement la quantité de matière plastique qui est nécessaire pour le pot à fabriquer sans devoir prévoir un surplus de matière comme c'est actuellement le cas pour prévenir les défauts d'étirage. On peut ainsi réduire la quantité de matière plastique utilisée et en conséquence le poids des pots, ce qui entraîne à la fois une économie sur le coût matière et sur le coût du transport.

Selon l'invention, un procédé de thermoformage de pots par étirage d'une feuille de matière plastique est défini conformément à la revendication 1.

Le procédé selon l'invention est encore remarquable en ce que :
- le chauffage est réalisé par des fers de chauffage constitués par des blocs comportant des moyens de chauffage,
- les fers de chauffe exercent une contrainte sur la matière plastique de manière à modifier l'épaisseur de ladite matière dans certaines zones en fonction de l'étirage que devront subir ces zones,
- la matière plastique utilisée est une préforme, c'est-à-dire une pièce de matière plastique dont le contour a la forme de l'extrémité du bord du pot à obtenir et dont l'épaisseur est déterminée de manière à fournir la quantité de matière plastique nécessaire à la formation du pot recherché.

L'invention concerne également un dispositif pour la mise en oeuvre du procédé selon l'invention.
Selon l'invention, ce dispositif de thermoformage de pots par étirage d'une feuille de matière plastique est défini conformément à la revendication 6.

Le dispositif est encore remarquable en ce que :
- le module de maintien comporte deux parties conformées de manière à pincer fermement la feuille de matière plastique sur le pourtour extrême des ouvertures,
- les fers de chauffe sont constitués par des blocs à parois creuses dans lesquels circule un fluide de chauffage,
- les deux parties du module de maintien sont conformées de manière à être fixées l'une sur l'autre à l'aide d'un montage du type à baïonnette,
- l'une des parties du module de maintien est adaptée à s'introduire dans un orifice central de l'autre partie du module de maintien et à y être bloquée en position tout en pinçant la matière plastique destinée à constituer le pot,
- la portion, dirigée en direction du moule, de l'ouverture du module de maintien est conformée de manière à constituer une partie de l'empreinte de moulage du pot,
- le module de maintien est en deux demi-parties raccordées le long d'un plan diamétral de manière à permettre le formage d'un pot présentant une portion supérieure d'encombrement diamétral plus faible que le reste du pot.

L'invention sera mieux comprise grâce à la description qui va suivre donnée à titre d'exemple non limitatif en référence aux dessins annexés dans lesquels :
- la figure 1 représente schématiquement les différentes étapes du thermoformage de pots en matière plastique suivant une première forme de réalisation de l'invention,
- la figure 2 représente schématiquement les différentes étapes du thermoformage de pots en matière plastique suivant une seconde forme de réalisation de l'invention,
- la figure 3 est une vue en coupe d'un exemple de réalisation du module de maintien adapté à la mise en oeuvre de préformes en matière plastique, dans leur position de pincement d'une préforme.

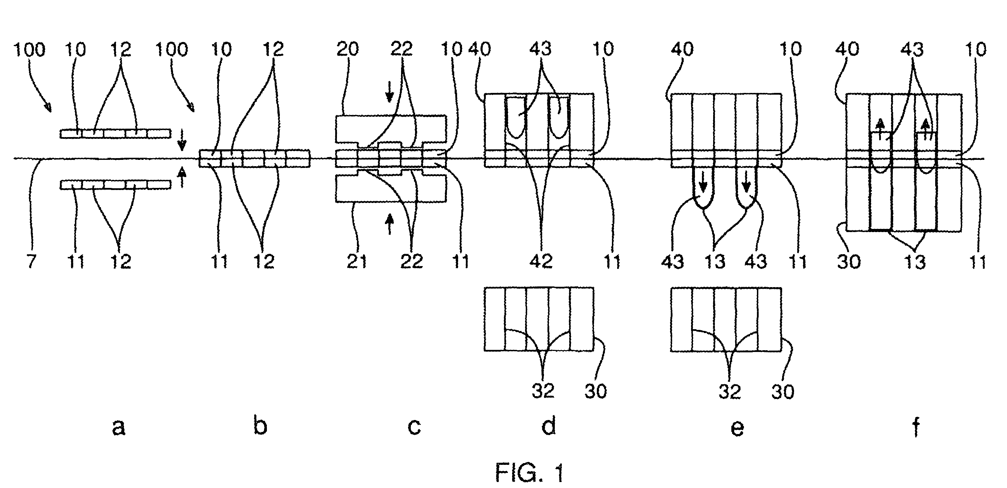

On a représenté à la figure 1 les étapes a à f du formage de pots à partir d'une feuille de matière plastique 7.

Dans l'exemple représenté, on procède au formage et à l'étirage de plusieurs pots au cours d'un même cycle de fabrication comme ceci est usuellement fait, il est bien entendu que l'on ne sortirai pas de la présente invention en ne constituant qu'un seul pot à chaque cycle de fabrication.

De manière connue en soi, le moule 30 présente au moins une et de préférence plusieurs empreintes 32 destinées chacune à la réalisation d'un pot et le contre-moule 40 comporte des alésages 42, dans lesquels sont montés coulissant des poinçons 43, qui sont amenés en alignement avec les empreintes 32 du moule 30.

Le dispositif mis en oeuvre comporte un module de maintien 100 disposé entre le contre-moule et le moule et constitué de deux parties 10, 11 respectivement disposées du côté du contre-moule 40 et du côté du moule 30. Le module de maintien 100 est indépendant du moule 30 et également indépendant du contre-moule 40 comme représenté au dessin.

Dans l'étape a du procédé schématisé à la figure 1, les deux parties 10, 11 du module de maintien 100 sont disposées de part et d'autre de la feuille de matière plastique 7 et rapprochées de celle-ci jusqu'à pincer ladite feuille à l'étape b. Les deux parties 10, 11 du module de maintien 100 présentent au moins une et usuellement des ouvertures 12 dont le nombre et la répartition correspondent au nombre et à la répartition des empreintes 32 du moule 30 qui sera mis en oeuvre dans la suite du procédé de formage.

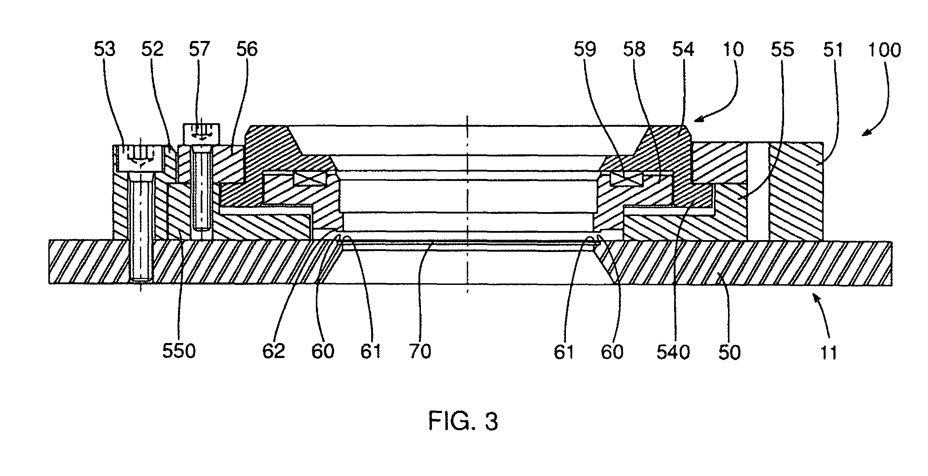

De manière non représentée à la figure 1, mais qui sera explicitée plus loin en relation avec l'exemple de réalisation de la figure 3, les deux parties 10, 11 du module de maintien, également nommées plaques de maintien, sont conformées de manière à pincer fermement la feuille de matière plastique sur le pourtour extrême des ouvertures 12, sur une surface de préférence très peu importante.

A l'étape c, la feuille de matière plastique est chauffée. Suivant l'invention, ce chauffage est réalisé par des fers de chauffe 20, 21 constitués par des blocs, par exemple métalliques, disposés de part et d'autre du module de maintien . Le chauffage desdits blocs peut par exemple être effectué de manière connue en soi au moyen de résistances électriques. De manière préférée, lesdits blocs ont des parois creuses dans lesquelles circule un fluide de chauffage dont la température est régulée suivant un procédé connu en soi, une telle disposition permet d'obtenir un chauffage beaucoup plus uniforme des fers de chauffe. Les fers de chauffe 20, 21 présentent au moins une excroissance, en réalité ils présentent un nombre d'excroissances égal au nombre d'ouvertures 12 du module de maintien et au nombre d'empreintes du moule. Lesdites excroissances 22 sont destinées à être introduites en partie dans les ouvertures 12 des plaques 10, 11 du module de maintien 100 afin que leur face avant soit amenée au contact de la matière plastique disposée dans lesdites ouvertures 12, c'est-à-dire de la matière destinée à être formée.

Les excroissances des fers de chauffe peuvent avantageusement exercer une contrainte sur la matière plastique de manière à modifier l'épaisseur de ladite matière dans certaines zones en fonction de l'étirage que devront subir ces zones.

L'un des fers de chauffe ou les excroissances de celui-ci sont montées de manière à pouvoir osciller afin de rattraper d'éventuels désalignements avec les ouvertures du module de maintien.

A la suite de ce chauffage, le contre-moule 40 est approché de la partie 10 du module de maintien 100 disposée de son côté tandis que le moule est laissé à distance de la partie 11 du module de maintien 100, et le formage de la matière plastique par les poinçons 43 débute avant que le moule 30 soit en place, c'est-à-dire fermé contre la surface du module de maintien. Le formage peut débuter lorsque ledit contre-moule 40 est en place, en appui sur la partie 10 du module de maintien 100, ou, de manière avantageuse, avant que ledit contre-moule soit au contact du module de maintien 100.

Le déplacement du poinçon est par exemple commandé au moyen de cames mécaniques ou de moteurs pas à pas associés au mouvement d'approche du contre-moule et du moule en direction du module de maintien.

Lorsque le formage débute après mise en appui du contre-moule 40 contre le module de maintien 100, il est intéressant d'envoyer de l'air à l'intérieur de la poche 13 de matière plastique créée par le déplacement du poinçon afin d'aider la réalisation de l'étirage de la matière. De préférence, l'air envoyé dans la poche est à basse pression et est chauffé afin de ne pas refroidir la matière. A cet effet, l'air circule dans un serpentin plongé dans un liquide chaud. L'air peut être envoyé dans la poche 13 au moyen d'une pompe à débit contrôlé ou d'une pompe à piston dont le déplacement est commandé par une came. Il est par exemple possible d'utiliser la tige du poinçon comme piston pour la pompe injectant l'air dans la poche 13.

Lorsque l'on commence le formage avant que le contre-moule soit en appui contre le module de maintien 100, l'on s'affranchit des problèmes dus à la mise en dépression de la cavité 42 dans laquelle se déplace le poinçon 43 puisque l'air est directement admis dans la poche 13 de matière formée par l'avance du poinçon à partir de la face supérieure de la partie 10 dudit module de maintien 100.

L'étirage de la matière est ainsi effectué dans l'air ambiant ce qui permet de mieux conserver la température de la feuille de matière plastique qui n'est pas refroidie par convection par les parois froides du moule et donc de procéder à un étirage beaucoup plus régulier de celle-ci.

Avantageusement, on prévoit de créer une zone à atmosphère chaude autour du dispositif d'étirage.

De plus, le fait de débuter le formage avant d'amener le moule permet de s'affranchir des problèmes qui se présentent habituellement lors du formage à l'intérieur de l'empreinte du moule et qui tient au fait que l'empreinte du moule est pleine d'air qui d'une part a tendance à plaquer la matière plastique contre le poinçon, et doit, d'autre part, être évacué au cours de la descente du poinçon.

Usuellement, le moule présente des canaux pour l'évacuation de l'air contenu dans chaque empreinte, mais il est pratiquement impossible de former des canaux assez grands pour permettre une expulsion quasi instantanée de l'air, car les orifices par lesquels ces canaux débouchent dans l'empreinte marquent le pot en cours de réalisation. Ceci a pour conséquence que les canaux pour l'évacuation de l'air de l'empreinte sont toujours trop petits.

Dans le mode de réalisation représenté au dessin, le moule 30 n'est approché qu'à l'étape f, c'est-à-dire lorsque le poinçon a réalisé pratiquement tout l'étirage de la matière plastique. L'air contenu dans l'empreinte est alors expulsé par la face supérieure du moule au fur et à mesure de l'approche dudit moule et donc de l'insertion de la poche 13 de matière préformée par les poinçons 43 dans l'empreinte.

Lorsque le moule 30 arrive en appui contre la partie 11 du module de maintien 100, le poinçon 43 peut avoir terminé sa course de formage ou être en fin de course. Il est alors rappelé dans le contre-moule, éventuellement après avoir terminé sa course, comme représenté par la flèche tandis que de l'air sous pression est envoyé à l'intérieur de la poche 13 pour la plaquer contre l'empreinte 32 du moule 30 et former le pot.

Le volume de l'air restant dans l'empreinte lors de la mise en place du moule 30 contre la partie 11 du module de maintien 100 est très faible, celui-ci est alors facilement et rapidement expulsé par les canaux d'évacuation du moule ce qui permet d'obtenir un refroidissement de la matière plastique qui est à la fois plus rapide et de meilleure qualité.

L'air sous pression est de préférence envoyé dans la poche 13 à travers l'alésage dans lequel se déplace le poinçon et son écoulement est avantageusement perturbé, par exemple par des chicanes, afin qu'il n'arrive pas directement sur la matière plastique étirée, ce qui aurait pour conséquence de la refroidir trop brutalement.

Des ouvertures de sortie d'air sont prévues afin de faire circuler l'air assurant le placage de la matière plastique contre l'empreinte du moule dans toute la poche 13 et d'assurer ainsi un refroidissement de bonne qualité de celle-ci ainsi qu'un dégazage permettant d'extraire les vapeurs dégagées par la matière plastique chauffée.

Les ouvertures de sortie d'air peuvent être constituées par des trous calibrés ouverts en permanence ou par des ouvertures munies de soupapes tarées.

Le fait de commencer le formage de la matière plastique avant que le moule soit en appui contre le module de maintien 100 permet d'augmenter la cadence de formage car l'étirage est réalisé pendant le déplacement du contre-moule et du moule et le placage est réalisé plus rapidement puisqu'il n'y a pratiquement plus d'air dans l'empreinte.

De plus, comme l'air est en grande partie évacué de l'empreinte au cours de l'approche du moule, il est pratiquement sûr que la matière plastique est convenablement plaquée contre les parois de l'empreinte au cours du soufflage et donc bien refroidie tandis que dans le procédé usuellement mis en oeuvre, au cours duquel le piston est descendu dans l'empreinte du moule, il peut rester des bulles d'air entre la matière plastique et l'empreinte.

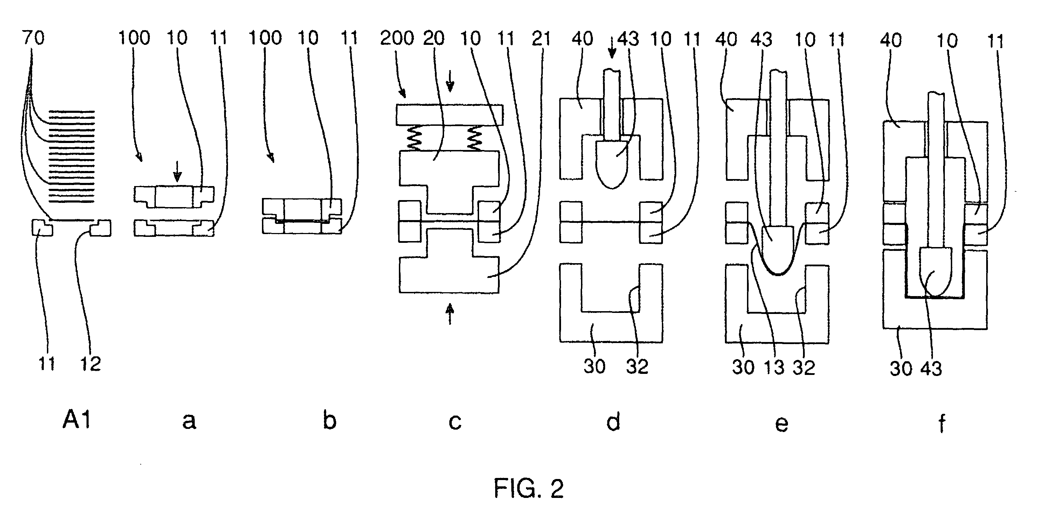

La figure 2 montre une seconde forme de réalisation de l'invention dans laquelle la feuille de matière plastique est avantageusement remplacée par des préformes 70. Une préforme est une pièce de matière plastique dont le pourtour a la forme de l'extrémité du bord du pot à obtenir et dont l'épaisseur est déterminée de manière à fournir la quantité de matière plastique nécessaire à la formation du pot recherché.

Une telle préforme peut être obtenue par découpage d'une plaque extrudée ou par moulage par injection.

Dans le cas d'une préforme découpée, le bord peut être soumis à une finition de manière à ne pas être agressif lorsqu'il est destiné à être en contact avec les lèvres de l'utilisateur, par exemple lorsque le pot est destiné à contenir une boisson.

Lorsque la préforme est obtenue par moulage, il est possible de donner toute forme voulue au bord de celle-ci, de manière à l'adapter à son utilisation future. On peut par exemple prévoir un pas de vis de manière à permettre la mise en place ultérieure d'un bouchon, un bec verseur, ...

Les préformes moulées peuvent encore avoir des zones d'épaisseurs différentes, en fonction de l'étirement auquel la matière de ces zones doit être soumise.

L'utilisation de préformes permet de réduire la quantité de matière utilisée et d'éviter la mise au rebut des chutes de matière séparant les zones mises en forme d'une bande.

Comme visible au dessin, le thermoformage de pots à partir de préformes met en oeuvre les mêmes étapes de fabrication que le thermoformage réalisé à partir d'une feuille de matière plastique, seule une étape préalable A1 est ajoutée. Au cours de cette étape A1,les préformes 70 initialement disposées, par exemple en pile, dans une machine non représentée, sont positionnées dans les ouvertures 12 de l'une des parties du module de maintien 100, la partie 11 disposée du côté du moule 30 dans l'exemple représenté au dessin.

On a représenté sur la figure 2 des moyens élastiques 200 assurant l'appui du fer de chauffe 20 sur la préforme 70 avec précontrainte.

A l'étape e, l'étirage est représenté comme débutant avant que le contre-moule 40 soit en appui contre la partie 10 du module de maintien 100, tandis que, selon l'invention, le thermoformage débute lorsque le contre-moule 40 est en appui contre le module de maintien.

Suivant une variante de réalisation non représentée au dessin, le module de maintien 100 peut avantageusement être chauffé par des moyens connus en soi et maintenu à une température de l'ordre de 50°C afin que la matière plastique ne soit pas trop refroidie par la masse de métal constituant ledit module de maintien.

Un mode de réalisation du moule de maintien selon l'invention va maintenant être décrit en référence à la figure 3. 3

Le module de maintien 100 est réalisé en deux parties 10, 11 qui peuvent être solidarisées l'une à l'autre par tout moyen mécanique connu en soi, tels que des cliquets, des aimants, des verrous rotatifs...

Dans l'exemple de réalisation représenté au dessin, les deux parties 10, 1 du module de maintien 100 sont conformées de manière à être fixées l'une sur l'autre à l'aide d'un montage du type à baïonnette.

La partie 10 du module de maintien 100 est adaptée à s'introduire dans un orifice central de la partie 11 du module de maintien 100 et à y être bloquée en position tout en pinçant la matière plastique destinée à constituer le pot.

La forme de réalisation représentée à la figure 2 est adaptée à l'emploi de préformes 70 de matière plastique.

La partie 11 du module de maintien 100 est constituée par une plaque inférieure 50 sur laquelle est fixée une bague globalement cylindrique 51 présentant des excroissances 52 sur sa paroi interne, par exemple au nombre de trois. La plaque 50 et la bague 51 sont rendues solidaires, par exemple par des vis 53. La plaque inférieure est traversée par un alésage central correspondant à l'alésage 12 des figures 1 et 2, la paroi interne dudit alésage présente un épaulement 61 bordant une portion 60 de l'alésage central. La section de l'alésage 60 correspond à la forme de la préforme 70 qui doit être positionnée dans le module de maintien, l'épaulement 61 est disposé à une distance de la paroi supérieure de la plaque 50 sensiblement égale à l'épaisseur du bord de la préforme 70.

La partie 10 du module de maintien 100 présente également un alésage interne correspondant à l'alésage 12 des figures 1 et 2 et comporte deux parties mobiles l'une par rapport à l'autre.

La partie externe est composée d'une plaque 55 à section en U présentant des excroissances 550, par exemple au nombre de trois, sur sa paroi externe et d'une plaque supérieure plane 56, fixée sur le haut de la paroi circonférentielle de la plaque 55 dont la paroi est plus large que celle de ladite paroi circonférentielle et dépasse vers l'intérieur de celle-ci. Les plaques 55 et 56 sont fixées l'une sur l'autre, par exemple au moyen de vis 57.

La partie interne comporte une portion 54 à section en Ω dont la paroi inférieure 540 est disposée entre les plaques 55 et 56 de la partie externe, à l'intérieur de laquelle est positionnée une plaque d'appui 58 présentant une excroissance annulaire s'engageant dans l'alésage central de la plaque 55 terminée par un bourrelet d'appui 62 destiné à être disposé en vis-à-vis de l'épaulement 61. La portion 54 à section en Ω et la plaque d'appui sont en appui l'une sur l'autre par l'intermédiaire d'un joint torique 59.

L'épaulement 61 et le bourrelet d'appui 62 présentent de préférence une nervure circonférentielle de section pointue assurant l'accrochage de la préforme 70 afin qu'elle ne glisse pas.

Lorsque la préforme 70 est positionnée dans l'alésage 60 de la partie 10 du module de maintien 100, en appui sur l'épaulement 61, la partie 10 du module de maintien 100 est amenée en étant orientée de manière telle que les excroissances 550 ne soient pas disposées en regard des excroissances 56. Une pression est exercée sur la portion 54 à section en Ω de manière à écraser le joint 59 et à permettre la rotation de la portion externe de la partie 10 pour positionner les excroissances 550 sous les excroissances 56 afin de solidariser les deux parties 10 et 11. Lorsque la pression sur la portion 54 à section en Ω est relâchée, le joint 59 reprend sa forme initiale et repousse la plaque d'appui 58 en direction de la préforme 70 afin de pincer le bord de celle-ci entre l'épaulement 61 et le bourrelet d'appui 62.

Comme visible sur le dessin la bordure de la préforme pincée entre l'épaulement 61 et le bourrelet d'appui 62 peut être de très faible encombrement, par exemple de l'ordre de 1 à 2 mm.

Cette disposition présente l'avantage de refroidir une très petite couronne circonférentielle de matière et en conséquence de former convenablement la quasi totalité de la matière plastique de la préforme, ce qui ne peut être obtenu sur les machines connues dans lesquelles une large collerette correspondant à toute la paroi supérieure du pot est pincée entre le moule et le contre-moule et donc refroidie ce qui entraîne la formation d'un bourrelet de matière mal étirée en haut du pot.

La portion 63 dirigée en direction du moule 30, de l'alésage central de la plaque 50, constituant une partie de l'ouverture 12 du module de maintien, peut être conformée de manière à constituer une partie de l'empreinte de moulage du pot. Cette disposition est par exemple avantageuse lorsque le pot présente une portion supérieure d'encombrement diamétral plus faible que le reste du pot, tel qu'un goulot, le goulot étant alors formé par placage de la matière plastique contre la portion 63 de l'alésage de la plaque 50 du module de maintien tandis que le reste du pot est mis en forme en étant plaqué contre l'empreinte du moule 30.

Dans cette forme de réalisation, les deux parties 10 et 11 du module de maintien 100 peuvent être prévues en deux demi-parties raccordées le long d'un plan diamétral et maintenues serrées l'une contre l'autre au moyen d'un système par exemple à baïonnettes. Pour le démoulage du pot, on écarte les deux demi-parties du module de maintien 100, puis on retire le pot de l'empreinte du moule.

De plus, le fait de débuter le formage avant que le moule soit en appui contre le module de maintien permet d'étirer convenablement la portion de matière disposée immédiatement à l'intérieur de la couronne pincée par ledit module de maintien.

## Revendications

1. Procédé de thermoformage de pots, dans lequel les pots sont obtenus par étirage d'une feuille de matière plastique à l'aide de poinçons (43) montés coulissants dans un contre-moule (40) et dans l'empreinte (32) d'un moule (30), puis placage contre les parois de ladite empreinte (32), ladite feuille de matière plastique étant pincée dans un module de maintien (100) indépendant du moule (30) et comportant au moins une ouverture (12), puis préchauffée, le chauffage de la matière étant réalisé par des fers de chauffe (20, 21) présentant des excroissances (22) destinées à être introduites en partie dans les ouvertures (12) dudit module de maintien (10, 11) afin d'être amenées au contact de la matière plastique destinée à être formée, disposée dans lesdites ouvertures (12),
**caractérisé en ce que** le module de maintien (100) est indépendant du contre-moule (40), **en ce que** le contre-moule (40) est approché du module de maintien (100) tandis que le moule (30) est laissé à distance du module de maintien (100), **en ce que** l'étirage de la matière débute avant que le moule (30) soit fermé contre ledit module de maintien (100) pour effectuer le formage de ladite matière plastique, **en ce que** le formage débute lorsque ledit contre-moule (40) est en place, en appui sur le module de maintien (100) et avant que le moule (30) soit en appui sur le module de maintien, et **en ce que** de l'air est envoyé à l'intérieur de la poche (13) de matière plastique créée par le déplacement du poinçon (43) afin d'aider la réalisation de l'étirage de la matière.

2. Procédé selon la revendication 1, **caractérisé en ce que** l'air envoyé dans la poche (13) est chauffé.

3. Procédé selon l'une des revendications 1 et 2, **caractérisé en ce que** les fers de chauffe (20, 21) sont constitués par des blocs comportant des moyens de chauffage.

4. Procédé selon l'une quelconque des revendications précédentes, **caractérisé en ce que** les fers de chauffe (20, 21) exercent une contrainte sur la matière plastique de manière à modifier l'épaisseur de ladite matière dans certaines zones en fonction de l'étirage que devront subir ces zones.

5. Procédé selon l'une quelconque des revendications précédentes, **caractérisé en ce que** la feuille de matière plastique utilisée est une préforme, c'est-à-dire une pièce de matière plastique dont le contour a la forme de l'extrémité du bord du pot à obtenir et dont l'épaisseur est déterminée de manière à fournir la quantité de matière plastique nécessaire à la formation du pot recherché.

6. Dispositif de thermoformage de pots par étirage d'une feuille de matière plastique, comportant :
- un moule (30) présentant au moins une empreinte (32),
- un contre-moule (40) présentant au moins un alésage (42), dans lequel un poinçon (43) est monté coulissant,
- un module de maintien (100) dans lequel la feuille de matière plastique peut être pincée, ce module étant indépendant du moule et présentant au moins une ouverture (12),
le nombre et la répartition des alésages du contre-moule et des ouvertures du module de maintien correspondant en nombre et en répartition aux empreintes du moule,
le dispositif comportant des fers de chauffe (20, 21) présentant des excroissances (22) destinées à être introduites en partie dans les ouvertures (12) dudit module de maintien (10, 11) afin d'être amenées au contact de la matière plastique destinée à être formée, disposée dans les ouvertures (12) pour chauffer cette matière,
**caractérisé en ce que** le module de maintien (100) est indépendant du contre-moule (40), **en ce que** le contre-moule (40) est susceptible d'être approché du module de maintien (100) tandis que le moule (30) est laissé à distance du module de maintien (100), **en ce que** le poinçon (43) est apte à être déplacé de telle sorte que l'étirage de la matière débute avant que le moule (30) soit fermé contre le module de maintien (100) pour effectuer le formage de la matière plastique, **en ce que** le contre-moule (40) est apte à être mis en place, en appui sur le module de maintien (100) pour que le formage débute avant que le moule soit en appui sur le module de maintien et **en ce qu'**il comprend des moyens pour envoyer de l'air à l'intérieur de la poche (13) de matière plastique créée par le déplacement du poinçon (43) afin d'aider la réalisation de l'étirage.

7. Dispositif selon la revendication 6, **caractérisé en ce que** le module de maintien (100) comporte deux parties (10, 11) conformées de manière à pincer fermement la feuille de matière plastique sur le pourtour extrême des ouvertures (12).

8. Dispositif selon la revendication 6 ou selon la revendication 7, **caractérisé en ce que** les fers de chauffe (20, 21) sont constitués par des blocs à parois creuses dans lesquels circule un fluide de chauffage.

9. Dispositif selon l'une quelconque des revendications 6 à 8, **caractérisé en ce que** les deux parties (10, 11) du module de maintien (100) sont conformées de manière à être fixées l'une sur l'autre à l'aide d'un montage du type à baïonnette.

10. Dispositif selon la revendication 9, **caractérisé en ce que** l'une (10) des parties du module de maintien (100) est adaptée à s'introduire dans un orifice central de l'autre (11) partie du module de maintien (100) et à y être bloquée en position tout en pinçant la matière plastique destinée à constituer le pot.

11. Dispositif selon l'une quelconque des revendications 6 à 10, **caractérisé en ce que** la portion (63), dirigée en direction du moule (30), de l'ouverture (12) du module de maintien (100) est conformée de manière à constituer une partie de l'empreinte de moulage du pot.

12. Dispositif selon la revendication 11, **caractérisé en ce que** le module de maintien (100) est en deux demi-parties raccordées le long d'un plan diamétral de manière à permettre le formage d'un pot présentant une portion supérieure d'encombrement diamétral plus faible que le reste du pot.

## Patentansprüche

1. Verfahren zur Thermoformung von Gefäßen, bei dem die Gefäße erhalten werden durch Ziehen einer Kunststofffolie mittels Stempeln (43), die so montiert sind, dass sie in einer Gegenform (40) und der Matrize (32) einer Form (30) gleiten, dann Platzieren gegen die Wände der Matrize (32),
wobei die Kunststofffolie in einem Haltemodul (100), das von der Form (30) unabhängig ist und wenigstens eine Öffnung (12) aufweist, geklemmt, dann vorerhitzt wird, wobei das Erhitzen des Materials durch Heizeisen (20, 21) erfolgt, die Ausstülpungen (22) aufweisen, die zum tellweisen Einführen In die Öffnungen (12) des Haltemoduls (10, 11) bestimmt sind, um mit dem Kunststoff, der geformt werden soll und in diesen Öffnungen (12) angeordnet ist, in Kontakt gebracht zu werden,
**dadurch gekennzeichnet, dass** das Haltemodul (100) von der Gegenform (40) unabhängig ist, dass die Gegenform (40) dem Haltemodul (100) angenähert wird, während die Form (30) im Abstand zu dem Haltemodul (100) gelassen wird, dass das Ziehen des Materials beginnt, bevor die Form (30) gegen das Haltemodul (100) geschlossen wird, um die Formung des Kunststoffs durchzuführen, dass die Formung beginnt, wenn die Gegenform (40) platziert ist, sich am Haltemodul (100) abstützend und bevor die Form (30) auf das Haltemodul drückt, und dass Luft ins Innere der durch Verschieben des Stempels (43) geschaffenen Kunststofftasche (13) geschickt wird, um bei der Durchführung des Ziehens des Materials zu helfen.

2. Verfahren nach Anspruch 1, **dadurch gekennzeichnet, dass** die in die Tasche (13) geführte Luft erhitzt wird.

3. Verfahren nach einem der Ansprüche 1 und 2, **dadurch gekennzeichnet, dass** die Heizeisen (20, 21) durch Blöcke gebildet sind, die Heizmittel enthalten.

4. Verfahren nach einem der vorhergehenden Ansprüche, **dadurch gekennzeichnet, dass** die Heizeisen (20, 21) eine Belastung auf den Kunststoff ausüben, so dass die Dicke des Materials in einigen Bereichen, in Abhängigkeit von dem Ziehen, dem diese Bereiche ausgesetzt sind, verändert wird.

5. Verfahren nach einem der vorhergehenden Ansprüche, **dadurch gekennzeichnet, dass** die verwendete Kunststofffolie eine Vorform ist, d.h. ein Stück aus Kunststoff, dessen Kontur die Form des Randes des zu erhaltenden Gefäßes aufweist, und dessen Dicke so bestimmt ist, dass die Menge an Kunststoff, die zur Herstellung des gewünschten Gefäßes notwendig ist, geliefert wird.

6. Vorrichtung zur Thermoformung von Gefäßen durch Ziehen einer Kunststofffolie, die aufweist:
- eine Form (30) mit wenigstens einer Matrize (32),
- eine Gegenform (40) mit wenigstens einer Bohrung (42), in der ein Stempel (43) gleitend befestigt ist,
- ein Haltemodul (100), in das die Kunststofffolie geklemmt werden kann, wobei dieses Modul unabhängig von der Form ist und wenigstens eine Öffnung (12) aufweist,
wobei die Anzahl und Verteilung der Bohrungen der Gegenform und der Öffnungen des Haltemoduls in Anzahl und Verteilung den Matrizen der Form entsprechen,
wobei die Vorrichtung Heizeisen (20, 21) beinhaltet, die Ausstülpungen (22) aufweisen, die zum teilweisen Einführen in die Öffnungen (12) des Haltemoduls (10, 11) bestimmt sind, um mit dem Kunststoff, der geformt werden soll und in diesen Öffnungen (12) angeordnet ist, zum Erhitzen des Materials, in Kontakt gebracht zu werden,
**dadurch gekennzeichnet, dass** das Haltemodul (100) von der Gegenform (40) unabhängig ist, dass die Gegenform (40) an das Haltemodul (100) angenähert werden kann, während die Form (30) im Abstand zu dem Haltemodul (100) gelassen wird, dass der Stempel (43) so verschoben werden kann, dass das Ziehen des Materials beginnt, bevor die Form (30) gegen das Haltemodul (100) geschlossen wird, um die Formung des Kunststoffs durchzuführen, dass die Gegenform (40) platziert werden kann, im Druck auf das Haltemodul (100), damit die Formung beginnt bevor die Form sich am Haltemodul abstützt, und dass sie Mittel aufweist, um Luft ins Innere der durch das Verschieben des Stempels (43) geschaffenen Kunststofftasche (13) zu schicken, um bei der Durchführung des Ziehens des Materials zu helfen.

7. Vorrichtung nach Anspruch 6, **dadurch gekennzeichnet, dass** das Haltemodul (100) zwei Teile (10, 11) aufweist, die so ausgebildet sind, dass sie die Kunststofffolie auf dem äußeren Umfang der Öffnungen (12) fest einklemmen.

8. Vorrichtung nach Anspruch 6 oder Anspruch 7, **dadurch gekennzeichnet, dass** die Heizeisen (20, 21) durch Blöcke mit hohlen Wänden, In denen eine Heizflüssigkeit zirkuliert, gebildet sind.

9. Vorrichtung nach einem der Ansprüche 6 bis 8, **dadurch gekennzeichnet, dass** die beiden Teile (10, 11) des Haltemoduls (100) so ausgebildet sind, dass sie, mittels einer Bajonett-Montage, aneinander befestigt werden können.

10. Vorrichtung nach Anspruch 9, **dadurch gekennzeichnet, dass** eines (10) der Teile des Haltemoduls (100) geeignet ist, sich in eine zentrale Öffnung des anderen (11) Teils des Haltemoduls (100) einzuführen und dort in Position blockiert zu werden, wobei der Kunststoff, der das Gefäß bilden soll, eingeklemmt ist.

11. Vorrichtung nach einem der Ansprüche 6 bis 10, **dadurch gekennzeichnet, dass** der in Richtung der Form (30) gerichtete Abschnitt (63) der Öffnung (12) des Haltemoduls (100) so ausgebildet ist, dass er einen Teil der Formungsmatrize des Gefäßes bildet.

12. Vorrichtung nach Anspruch 11, **dadurch gekennzeichnet, dass** das Haltemodul (100) aus zwei Halbtelien besteht, die entlang einer diametralen Ebene verbunden sind, derart, dass die Formung eines Gefäßes, das einen oberen Abschnitt mit einem diametralen Raumbedarf aufweist, der geringer ist als der Rest des Gefäßes, ermöglicht wird.

## Claims

1. Process for heat-forming pots, in which the pots are obtained by drawing a sheet of plastics material using dies (43) mounted slidingly in a counter-mould (40) and in the impression (32) of a mould (30), then plating against the walls of the said impression (32), the said sheet of plastics material being gripped in a holding unit (100) independent of the mould (30) and including, at least one opening (12), and then preheated, the heating of the material being'effected by heating irons (20, 21) presenting protuberances (22) intended to be partially introduced into the openings (12) of the said holding unit (10, 11) in order to be brought into contact with the plastics material intended to be formed, arranged in the said openings (12),
**characterised by** the fact that the holding unit (100) is independent of the counter-mould (40), by the fact that the counter-mould (40) is brought close to the holding unit (100) while the mould (30) is left at a distance from the holding unit (100), by the fact that the drawing of the material commences before the mould (30) is closed against the said holding unit (100) to form the said plastics material, by the fact that the forming commences when the said counter-mould (40) is in place, in contact with the holding unit (100) and before the mould (30) is in contact with the holding unit, and by the fact that air is sent into the pocket (13) of plastics material created by the displacement of the die (43) in order to assist drawing of the material.

2. Process as described in claim 1, **characterised by** the fact that the air sent into the pocket (13) is heated.

3. Process as described in one of claims 1 and 2, **characterised by** the fact that the heating irons (20, 21) are formed of blocks including heating means.

4. Process as described in any one of the preceding claims, **characterised by** the fact that the heating irons (20, 21) apply a stress to the plastics material so as to modify the thickness of the said material in certain zones as a function of the drawing to which these zones must be subjected.

5. Process as described in any one of the preceding claims, **characterised by** the fact that the sheet of plastics material used is a preform, i.e. a piece of plastics material the contours of which have the form of the end of the edge of the pot to be obtained and the thickness of which is so determined as to provide the quantity of plastics material required to form the desired pot.

6. Device for heat-forming pots by drawing a sheet of plastics material, including:
- a mould (30) presenting at least one impression (32),
- a counter-mould (40) presenting at least one bore (42), in which a die (43) is slidingly mounted,
- a holding unit (100) in which the sheet of plastics material can be gripped, this unit being independent of the mould and presenting at least one opening (12)
the number and distribution of the bores of the counter-mould and of the openings of the holding unit corresponding in number and distribution to the impressions of the mould,
the device including heating irons (20, 21) presenting protuberances (22) intended to be partially introduced into the openings (12) of the said holding unit (10, 11) in order to be brought into contact with the plastics material intended to be formed, arranged in the openings (12) to heat this material,
**characterised by** the fact that the holding unit (100) is independent of the counter-mould (40), by the fact that the counter-mould (40) can be brought close to the holding unit (100) while the mould (30) is left at a distance from the holding unit (100), by the fact that the die (43) can be displaced so that the drawing of the material commences before the mould (30) is closed against the holding unit (100) to form the said plastics material, by the fact that the counter-mould (40) can be placed in position, in contact with the holding unit (100), for the forming to commence before the mould is in contact with the holding unit, and by the fact that it includes means to send air into the pocket (13) of plastics material created by the displacement of the die (43) in order to assist drawing.

7. Device as described in claim 6, **characterised by** the fact that the holding unit (100) includes two parts (10, 11) so formed as to firmly grip the sheet of plastics material around the end periphery of the openings (12).

8. Device as described in claim 6 or claim 7, **characterised by** the fact that the heating irons (20, 21) are formed of blocks with hollow walls in which a heating fluid circulates.

9. Device as described in any one of claims 6 to 8, **characterised by** the fact that the two parts (10, 11) of the holding unit (100) are so formed as to be fixed one on the other by means of a fitting of bayonet type.

10. Device as described in claim 9, **characterised by** the fact that one (10) of the parts of the holding unit (100) is suitable to be introduced into a central orifice of the other (11) part of the holding unit (100) and to be locked in position there gripping the plastics material intended to form the pot.

11. Device as described in any one of claims 6 to 10, **characterised by** the fact that the portion (63) directed towards the mould (30), of the opening (12) of the holding unit (100) is so formed as to constitute part of the impression for moulding the pot.

12. Device as described in claim 11, **characterised by** the fact that the holding unit (100) is in two half-parts joined along a diametric plane so as to allow forming of a pot presenting an upper portion of smaller diametric dimension than the rest of the pot.
